# EUROPÄISCHE PATENTANMELDUNG

(11) **EP 0 990 583 A2**
(43) Veröffentlichungstag der Anmeldung: **05.04.2000**
(21) Anmeldenummer: 99119231.1
(22) Anmeldetag: 28.09.1999
(51) Int. Cl.: B62K 27/12, B62K 13/02

(54) **Anhängerkupplung für Fahrräder**

(30) Priorität: 29.09.1998 DE 29817400 U
(71) Anmelder: Wern, Andreas, 79689 Maulburg (DE)
(72) Erfinder: Wern, Andreas, 79689 Maulburg (DE)
(74) Vertreter: Ebert, Jutta

(57) **Zusammenfassung**

Es wird eine sichere, seitenstabile, leicht montier- und demontierbare Anhängerkupplung vorgeschlagen, mit der sich zwei Fahrräder, das eine als Zugfahrrad, das andere als Folgefahrrad, schnell und mit wenigen Handgriffen und ohne Werkzeug zu einem Fahrradgespann hintereinander kuppeln lassen und die einfach an Fahrräder unterschiedlichen Typs und unterschiedlicher Größe angepaßt werden kann.

Ein Ausleger (1) wird durch eine Klemmverbindung (2) vertikal verstellbar mit dem Sattelstützrohr (3) oder der Sattelstütze des Zugfahrrads verbunden. An seinem hinteren Ende befindet sich ein Dreh- und Kippgelenk (17), mit dem das eine Ende einer gebogenen Verbindungsstange (18) fest verbunden ist. Das andere Ende der Verbindungsstange (18) wird in eine am Steuerrohr (19) des Folgefahrrads befestigte Halterung (20) eingesteckt und durch einen (Feder-)Stecker (22) gegen Kippen gesichert. Durch den Ausleger (1) werden Verbindungspunkt am Zugfahrrad und Drehpunkt derart voneinander getrennt, daß sich eine verkürzte Anbindung des Folgefahrrads ergibt und dadurch dessen Einscheren bei Kurvenfahrten verringert wird. Die Anpassung an unterschiedliche Fahrräder erfolgt durch Höhenverstellung des Auslegers (1) und der Halterung (20) am Folgefahrrad. Die gebogene Verbindungsstange kann sich bei Belastung weiten. Ein Spiel zwischen Verbindungsstange (18) und Halterung (20) ermöglicht ein Ausweichen des Folgerad-Vorderrads nach oben bei Bodenschlägen.

## Beschreibung

Die Erfindung betrifft eine Arhängerkupplung für Fahrräder für das Hintereinander-Ankuppeln eines Fahrrads an ein Zug-Fahrrad.

Solche hintereinander gekuppelten Fahrradgespanne sind insbesondere in der Kombination von einem Erwachsenen-Fahrrad als Zugfahrrad und einem Kinderfahrrad als gezogenem Fahrrad bekannt. Sie dienen vor allem der Sicherheit des Kindes und haben auch didaktischen Wert, indem das Kind frühzeitig und eigentlich spielerisch an eine richtiges Verhalten im Verkehr gewöhnt werden können.

Bekannt sind Anhängefahrräder und Verbindungssysteme für ganze Fahrräder, insbesondere Kinderfahrräder, mit einer Kupplungsstelle zur Verbindung mit einem Zugfahrrad. Unter Anhängefahrrädern werden dabei Konstruktionen verstanden, die für sich genommen kein vollständiges, auch für sich allein benutzbares Fahrrad darstellen sondern nur ein Hinterrad aufweisen und wegen des fehlenden Vorderrades darauf beschränkt sind, an ein Zugfahrrad angehängt und von diesem gezogen zu werden.

Bei beiden Bauformen liegt der Kuppelpunkt direkt im Dreh- und Kippgelenk oder in unmittelbarer Nähe davon. Das Dreh- und Kippgelenk selbst ist an vorhandenen Fahrradbauteilen des Zugfahrrads befestigt. Aus der Fachzeitschrift "RadMarkt", Ausgabe 6/96, ist der Vorschlag bekannt, die Verbindungsstelle samt Dreh- und Kippgelenk an einem Spezialgepäckträger des Zugfahrrades vorzusehen; nach dem deutschen Gebrauchsmuster 296 19 043.9 kann ein ausgewählter Standardgepäckträger verwendet werden, andere Vorschläge nutzen dazu die Hinterradgabel oder die Sattelstütze. Die Träger des Gelenks sind bei allen diesen Vorschlägen dauerhaft mit dem Fahrradrahmen verbunden bzw. nicht selbst als Kuppelpunkte vorgesehen.

Gepäckträgerbefestigungen verkürzen den Abstand zur Verbindungsstelle am Kinderfahrrad und verringern damit dessen Einscheren in Kurven. Standardgepäckträger sind aber bisher nicht als Zugkupplung nach DIN 79 121 bzw. 79 100 II prüfbar. Dafür sind Spezialträger mit verstärkter Zugradanbindung erforderlich. Auch Standard-Sattelstützen wurden noch nicht auf Schub und Biegung dimensioniert und geprüft. Die Prüffähigkeit nach DIN oder ISO des Gesamtsystems Zugfahrrad und Anhängevorrichtung setzt deshalb Rahmenanknüpfungspunkte voraus.

Die kinderradseitige Befestigung erübrigt sich bei Anhängefahrrädern, da der Rahmen bis in den Dreh- bzw. Kuppelpunkt verlängert ist. Fahrräderverbindungssysteme benutzen ein Zwischenglied, z.B. eine Stange, zwischen zwei autonomen Fahrrädern. Sie müssen das Vorderrad des gezogenen Fahrrades anheben, um das Radieren des Reifens in Kurven und einen eventuellen Lenkeingriff des Kindes zu vermeiden. Das Zwischenglied dient der starren Rahmenverlängerung des gezogenen Fahrrades und wird damit fest verschraubt.

Als nachteilig hat es sich dabei erwiesen, daß eine schnelle Lösbarkeit des Zwischengliedes als Verlängerung am Kinderfahrrad, etwa in der Funktion als Kuppelpunkt, bisher nicht erreicht oder nicht beabsichtigt wurde. Die Befestigung des Drehgelenks an der Sattelstütze hat eine lange und unhandliche Anbindung des Kinderfahrrades zur Folge und erzeugt gegenüber der Gepäckträgerbefestigung ein stärker einscherendes Kurvenverhalten. Bisherige Verbindungssysteme mit Sattelstützanschluss berauben sich der Möglichkeit eines besseren Bedienkomfort, z.B. des Mitführens für den Bedarfsfall, des schnellen und werkzeuglosen Auf- und Abbaus des Gespanns und einer erwünschten Kompaktheit beim Deponieren oder Rangieren.

Aufgabe der Erfindung ist es, ein sicheres, seitenstabiles und gleichzeitig universell einsetzbares und ohne besondere Hilfsmittel montier- und anpassbares, bedienerfreundliches Fahrräderverbindungssystem zu schaffen, das den oben dargelegten, teilweise gegenläufigen Anforderungen an das System in möglichst optimaler Weise gerecht wird.

Dies wird erfindungsgemäß dadurch erreicht, daß ein Ausleger mit seinem einen Ende durch eine Klemmverbindung vertikal verstellbar mit dem Sattelstützrohr oder der Sattelstütze des Zugfahrrades verbunden ist und an seinem anderen Ende ein Dreh- und Kippgelenk trägt, mit dem das eine Ende der Verbindungsstange verbunden ist und daß das andere Ende der Verbindungsstange in eine am Steuerrohr des Folgefahrrads befestigte Halterung kippsicher einsteckbar ist.

Durch den Ausleger werden der Befestigungspunkt der Anhängerkupplung am Zugfahrrad und der Drehpunkt im Dreh- und Kippgelenk derart voneinander getrennt, daß sich gegenüber bekannten Vorrichtungen eine deutliche Verkürzung für die Rahmenverlängerung bzw. die Verbindungsstange ergibt und sich dadurch das Einscheren des Folgefahrrads bei Kurvenfahrten verringert, das gebildete Fahrradgespann also sicherer und seitenstabiler wird. Außerdem ergibt sich quasi eine Zweiteiligkeit der Anhängerkupplung, so daß sie im unbenutzten Zustand raumsparend zusammengefaltet und aufbewahrt oder auch für den Bedarfsfall mitgeführt werden kann.

Nach einer bevorzugten Ausführugsform besteht die Klemmverbindung aus einem Prisma mit zur Klemmung des Sattelstützrohres an den Prismenklemmflächen parallel zustellbarem Gegenriegel.

Das Prisma und der Gegenriegel sind beidseitig des Sattelstützrohrs von Schrauben durchdrungen, und das eine Ende des Gegenriegels weist ein Langloch auf, durch das die eine Schraube stößt; das andere Ende des Gegenriegels ist gabelförmig ausgebildet und kann durch im Langloch geführtes Verschieben und Drehen des Gegenriegels um die eine Schraube mit der anderen Schraube in Eingriff gebracht werden. Durch einen Spannhebel ist der Gegenriegel parallel auf das Prisma zustellbar. Der Ausleger kann so einfach und mit wenigen Handgriffen, ohne Zuhilfenahme von Werkzeug am Zugfahrrad sicher und vertikal verstellbar, d.h. an unterschiedlich Typen und Größen von Zugfahrrädern anpaßbar, befestigt werden.

Wenn die Verbindungsstange erfindungsgemäß gebogen ist und dabei ihr Radius vorzugsweise etwa dem des Hinterrades des Zugfahrrads entspricht, kann sie sich unterschiedlichen Belastungen besser anpassen, indem sich der Bogen bei höherer Belastung weitet.

Nach einer Ausführungsform ist der Ausleger an seinem hinteren Ende oder nahe seinem hinteren Ende beidseitig durch Stützstangen an den Ausfallenden der Hinterradgabeln abgestützt.

Dabei sind die Stützstangen an ihrem einen Ende mittels Schelle verschiebbar am Ausleger befestigt, und ihre effektive Länge kann durch Drehen der Schelle um 180° verändert werden. Durch diese mögliche Höhenverstellung des Auslegers kann die Anhängerkupplung an Gespannkombinationen unterschiedlicher Größe, mit und ohne Gepäckträger am Zugfahrrad angepaßt werden. Ein vorhandener Gepäckträger bleibt weiter benutzbar.

Eine zusätzliche Möglichkeit der Höhenverstellung ergibt sich, wenn die Stützstangen an ihrem an den Hinterradgabeln zu befestigendem Ende jeweils eine Reihe von Lochungen aufweisen, mit denen sie auf jeweils einen von den Ausfallenden der Hinterradgabeln vorstehenden Zapfen aufgesteckt werden können.

Auf den Zapfen sind die aufgesteckten Enden der Stützstangen durch ein Halteblech mit Sicherungsbügel gesichert; auch dazu wird kein Werkzeug benötigt.

Alternativ kann die Höhenverstellung des Auslegers auch erfolgen, indem das Prisma mit einem keilförmig zulaufenden Ende in den als Vierkantrohr ausgebildeten Ausleger hineinragt und eine Stellschraube durch Bohrungen in der Wand des Auslegers und eine mit diesen fluchtende Gewindebohrung im keilförmigen Ende des Prismas ragt. Durch Drehen der Stellschraube kann der Ausleger gegenüber dem Prisma um einen durch das keilförmige Ende des Prismas bestimmten Winkel geschwenkt werden. Die Stützstangen können dann wegfallen.

Das mit dem Folgefahrrad zu verbindende Ende der Verbindungsstange ist vorzugsweise schnabelförmig ausgebildet und kann mit diesem Schnabel zwischen zwei am Steuerrohr des Folgefahrrads angebrachten Flansch- und Klemmblechen so eingeschoben werden, daß es auf einer die Flansch- und Klemmbleche durchstoßenden Durchsteckschraube aufsitzt; durch einen die Flansch- und Klemmbleche und das eine Schnabelende mit Spiel durchstoßenden (Feder-)Stecker wird die Verbindung gesichert.

Vorteilhaft weisen die Flansch- und Klemmbleche an ihrem von der Verbindungsstelle mit der Verbindungsstange abgewandten Ende zwei gebogene, sich deckende Langlöcher auf, durch die eine Durchsteckschraube ragt, um die die Flansch- und Klemmbleche verschwenkbar sind. So ist eine Höhenanpassung der Verbindung auch am Folgerrad möglich.

Bei abgehängtem Folgefahrrad kann die Verbindungsstange im Dreh- und Kippgelenk in eine Bereitschaftsstellung nahe am Hinterrad des Zugfahrrads geschwenkt werden und in dieser Stellung am Dreh- und Kippgelenk durch den (Feder-)Stecker gegen Kippen gesichert werden.

Die Erfindung wird im folgenden anhand der anhängenden Zeichnung beispielhaft näher beschrieben; es zeigen:
- Fig. 1: in Seitenansicht schematisch eine Ausführungsform der erfindungsgemäßen Verbindungsvorrichtung zwischen einem Erwachsenen- und einem Kinderfahrrad,
- Fig. 2: als Ausschnitt die Verbindungsstelle am Sattelstützrohr nach einer gegenüber Fig. 1 teilweise variierten Ausführungsform der Erfindung,
- Fig. 3: eine Draufsicht auf die Verbindungsstelle am Sattelstützrohr gemäß Fig. 1 und 2 und
- Fig. 4: eine Draufsicht auf die Verbindungsstelle der erfindungs gemäßen Vorrichtung an der Hinterradgabel eines Zugfahrrads nach der Ausführungsform gemäß Fig. 1.

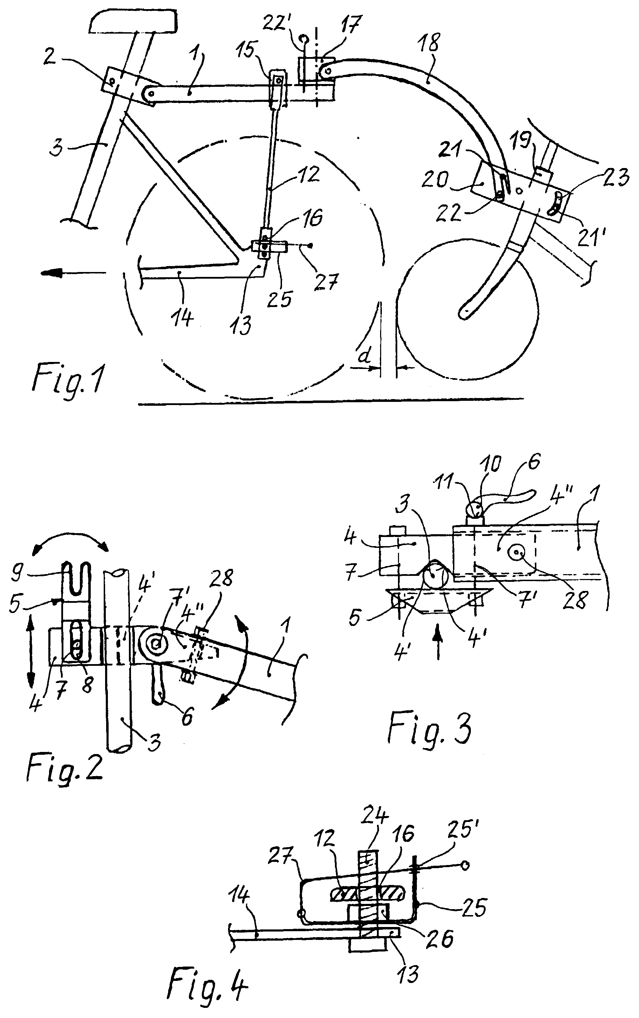

Gemäß Fig. 1 ist ein Ausleger 1 mit Hilfe einer Klemmverbindung 2 am Sattelstützrohr 3 oder auch an der Sattelstütze eines Zugfahrrades gelenkig und vertikal verstellbar befestigt. Wie aus den Fig. 2 und 3 ersichtlich, besteht die Klemmverbindung 2 bevorzugt aus einem Prisma 4 mit schwenkbarem Gegenriegel 5, der sich mit Hilfe eines Spannhebels 6 gegenüber dem Prisma 4 festziehen läßt, nachdem zuvor die Prismenklemmflächen 4' des Prismas 4 am Sattelstützrohr 3 zur Anlage gebracht wurden und der Gegenriegel 5 in Klemmstellung geschwenkt wurde, so daß das Sattelstützrohr 3 kraftschlüssig zwischen dem Prisma 4 und dem Gegenriegel 5 geklemmt wird.

Wie aus Fig. 3 ersichtlich, besteht der Gegenriegel 5 aus einem Vierkantrohr, das an seinen beiden Enden so abgeschnitten ist, daß es in der Seitenansicht Trapezform hat. Beidseitig der Prismenklemmflächen 4' des Prismas 4 durchdringen Schrauben 7 und 7' das Prisma 4, von denen die eine 7 durch ein Langloch 8 in dem einen Ende der die Klemmfläche des Gegenriegels 5 bildenden Wand des Vierkantrohres ragt, so daß der Gegenriegel 5, wie in Fig. 2 angedeutet, gegenüber dem Prisma 4 um diese Schraube 7 verdrehbar und in dem Langloch 8 verschiebbar ist. Das andere Ende der die Klemmfläche des Gegenriegels 5 bildenden Wand des Vierkantrohrs ist als Gabel 9 ausgebildet und kann durch das erwähnte Verdrehen und Verschieben des Gegenriegels 5 mit der zweiten Schraube 7' in Eingriff gebracht werden, nachdem die Prismenklemmflächen 4' an das Sattelstützrohr 3 angelegt wurden. Die eine Schraube 7' durchdringt außerdem das über das Prisma 4 mit dem Sattelstützrohr 3 zu verbindende Ende des Auslegers 1, der als hohler Vierkant ausgebildet sein kann, in den das eine Ende des Prismas 4 ragt. Mit Hilfe des Spannhebels 6, der z.B. einen Excenter 10 aufweist, der auf einer am Ende der einen Schraube 7' vorgesehenen Kurvenfläche 11 abläuft, können das Prisma 4 und der Gegenriegel 5 parallel zugestellt und gegeneinander festgezogen werden, so daß die kraftschlüssige Verbindung zwischen Prisma 4, Sattelstützrohr 3 und Gegenriegel 5 hergestellt wird.

An seinem anderen Ende wird der Ausleger 1 beidseitig des Hinterrades des Zugfahrrades über Stützstangen 12 auf den Ausfallenden 13 der Hinterradgabel 14 abgestützt. Die oberen Enden der Stützstangen 12 sind über eine auf dem Ausleger 1 verschiebbare Schelle 15 mit diesem verbunden. Um die Länge der Stützstangen 12 an unterschiedliche Typen und Fabrikate von Zugfahrrädern anpassen zu können, kann die Schelle 15 auf dem Ausleger 1 so gedreht werden, daß ihre Befestigungslaschen entweder nach oben oder nach unten weisen. Zur weiteren Längenanpassung der Stützstangen 12 kann außerdem das abgeflachte Ende der Stützstangen 12, das mit den Ausfallenden 13 der Hinterradgabel 14 verbunden wird, mit einer Reihe von Lochungen 16 versehen sein. Mit einer dieser Lochungen 16 werden die Stützstangen 12 auf Schraubenenden 24, die an den Ausfallenden 13 der Hinterradgabel 14 vorgesehen werden, aufgesteckt und befestigt. Eine Möglichkeit für eine schnelle und sichere Befestigung wird weiter unten anhand von Fig. 4 genauer beschrieben.

Auf dem hinteren Ende des Auslegers 1 ist ein Dreh- und Kippgelenk 17 (Kardangelenk) befestigt, mit dem eine, vorzugsweise gebogene, Verbindungsstange 18 mit ihrem einen Ende fest verschraubt ist, während an ihrem anderen Ende die Verbindung mit dem zu ziehenden Folgefahrrad, z.B. ein Kinderfahrrad, hergestellt werden kann. Der Bogen der Verbindungsstange 18 kann sich bei Belastung vorteilhaft weiten.

Am Steuerrohr 19 des Folgefahrrads sind zwei parallele Flansch- und Klemmbleche 20, z.B. mit Hilfe von Spannbacken, fest montiert und mittels Durchsteckschrauben 21, 21' gegenseitig festgezogen. Das gemäß Fig. 1 schnabelförmig ausgebildete, hintere Ende der Verbindungsstange 18 wird zwischen die vorspringenden Enden der Flansch- und Klemmbleche 20 geschoben, daß das innere Schnabelende auf der einen Durchsteckschraube 21 aufsitzt. Mit Hilfe eines Splints oder (Feder-) Steckers 22, der durch sich deckende Durchgangslöcher in den Flansch- und Klemmblechen 20 und dem einen, breiteren Schnabelteil, vorzugsweise mit Spiel (siehe unten), hindurchgesteckt wird, wird die Verbindung endgültig und sicher hergestellt; gleichzeitig wird damit die Verbindungsstange 18 in dieser Halterung gegen Kippen gesichert. In den hinteren Enden der Flansch- und Klemmbleche 20 sind sich deckende, leicht gebogene Langlöcher 23 vorgesehen, durch die die zweite, hintere Durchsteckschraube 21' ragt und festgezogen ist. Diese Langlöcher 23 ermöglichen es, den Bodenabstand des Vorderrades bei unterschiedlichen Typen oder Größen des gezogenen Folgefahrrads einzustellen. Dieses Vorderrad des Folgefahrrads soll nämlich, wie in Fig. 1 dargestellt, ohne eigenen Bodenkontakt sein und einen Abstand zum Boden von ca. 5cm halten. Indem die hintere Durchsteckschraube 21' gelockert wird, kann die Höhenanpassung des Vorderrades durch Verschwenken der Flansch- und Klemmbleche 20 vorgenommen und durch erneutes Festziehen der Durchsteckschraube 21' festgestellt werden. Indem das Vorderrad des gezogenen Folgefahrrads wie beschrieben angehoben wird, wird erreicht, daß das Folgefahrrad in der Spur des Zugfahrrads bleibt und diesem auch bei Kurvenfahrt ohne auszuscheren genau und sicher folgt; der Abstand d zwischen dem Hinterrad des Zugfahrrads und dem angehobenen Vorderrad des Folgefahrrads bleibt dabei konstant.

Wie erwähnt, durchdringt der (Feder-)Stecker 22 die für ihn vorgesehenen Durchgangslöcher in den Flansch- und Klemmblechen 20 sowie dem schnabelförmigen Ende der Verbindungsstange 18 vorteilhaft mit Spiel. Damit können eventuelle Bodenschläge durch Ausweichen des Vorderrades über Parallelogrammverschiebung der Verbindungsstange 18 nach oben abgefangen werden und es kommt nicht zu Biegebelastungen an Rahmen- und Verbindungsteilen.

In Fig. 4 ist eine vorteilhafte, weil schnelle, sichere und einfach zu betätigende Art der Befestigung der Stützstangen 12 an den Hinterradgabeln 14 dargestellt. Von den Ausfallenden 13 der Hinterradgabeln 14 ragt ein Zapfen 24 ab, der nach der Ausführungsform gemäß Fig. 4 durch Schraube 24 gebildet wird, welche durch eine Bohrung im Ausfallende 13 der Hinterradgabel 14 gesteckt ist. Auf die Schraube 24 ist ein winklig gebogenes Halteblech 25 aufgeschoben; mittels Kontermutter 26 sind das Halteblech 25 und die Schraube 24 an der Hinterradgabel 14 gesichert. Am Ende des zur Hinterradgabel 14 parallel verlaufenden Schenkels des Halteblechs 25 ist ein Sicherungsbügel 27 verschwenkbar angelenkt, der am abragenden, freien Ende 25' des abgewinkelten Halteblechs 25 zum einrasten gebracht werden kann. Bei geöffnetem Sicherungsbügel 27 wird die Stützstange 12 mit einer ihrer Lochungen 16 (siehe Fig. 1) auf das vorstehende Ende der Schraube 24 aufgesteckt und der Sicherungsbügel 27 geschlossen und am Halteblech 25 eingerastet.

Eine Alternative zur Höhenverstellung und Höhenanpassung des Auslegers 1 mit Hilfe der Stützstangen 12 ist in den Fig. 2 und 3 wiedergegeben. Dabei ragt das Prisma 4 mit einem keilförmig auslaufenden Ende 4'' an der Verbindungsstelle in den hohlen Ausleger 1.Durch das keilförmige Ende 4'' des Prismas 4 geht eine Gewindebohrung, die mit vertikalen Durchgangsbohrungen im Ausleger 1 fluchtet. Durch diese Durchgangsbohrungen und die Gewindebohrung im Prisma 4 geht eine Stellschraube 28, mit der der Ausleger 1 um einen durch den Keilwinkel des Prismenendes 4'' definierten Winkel vertikal geschwenkt, also verstellt werden kann, so daß die gewünschte Höhenanpassung vorgenommen werden kann.

Durch die Höhenverstellbarkeit, ob mit Stützstangen 12 oder mit Stellschraube 28 und keilförmigen Ende 4'' am Prisma 4, kann die Vorrichtung an Fahrradgespannkombinationen unterschiedlicher Größe und mit oder ohne Gepäckträger am Zugfahrrad angepaßt werden. Der Ausleger 1 kann durch die vertikale Verstellbarkeit des prismatischen Anschlusses unterschiedliche Sattelstützwinkel, Rahmen- und Gepäckträgerhöhen ausgleichen. Außerdem kann durch den geänderten Achswinkel des Drehgelenks zwischen Ausleger 1 und Prisma 4 ein de- bis progressives Kurvenverhalten des Folgefahrrads erzeugt werden.

Mit der erfindungsgemäßen Anhängerkupplung lassen sich mit wenigen Handgriffen und ohne Zuhilfenahme von Werkzeug und ohne verlierbare Teile in kurzer Zeit zwei an sich autonome Fahrräder, bevorzugt eine Erwachsenenfahrrad als Zugfahrrad und eine Kinderfahrrad als Folgefahrrad, zu einem Gespann verbinden und genauso einfach wieder lösen, da die Verbindung jeweils mit schnellspannenden und spielfreien Steck- und/oder Klemmverschlüssen hergestellt wird. So kann z.B. das Kind auf seinem Fahrrad über normale Verkehrsstraßen sicher zum nächsten Park oder in eine Gelände gezogen werden, wo es selbständig auf seinem Fahrrad fahren kann; dazu braucht lediglich die Verbindungsstange 18 aus der Halterung zwischen den Flansch- und Klemmblechen 20 am Kinderfahrrad gezogen werden, nachdem der (Feder-)Stecker 22 entfernt wurde. Die Verbindungsstange 18 ist mit einem Radius gebogen, der etwa dem der Räder des Zugfahrrades entspricht. So kann sie, wenn das Kinderfahrrad abgehängt wurde im Drehgelenk 17 nach unten in eine Bereitschaftsstellung geklappt werden, in der sie auf dem Drehgelenk 17 eine Auflage findet und etwa dem Hinterrad des Zugfahrrades folgt, also für den Fahrer des Zugfahrrades nicht störend oder hinterlich ist. Mit demselben (Feder-) Stecker 22, mit dem zuvor die Verbindung der Verbindungsstange 18 zwischen den Flansch- und Klemmblechen 20 gesichert wurde, wird in der Bereitschaftsstellung das Dreh- und Kippgelenk 17 am Ausleger 1 in einer Steckbohrung gegen Verdrehen oder Kippen gesichert, wie es in Fig. 1 bei 22' angedeutet ist. Dies hat den zusätzlichen Vorteil, daß der (Feder-) Stecker 22 nicht verloren gehen kann. Andere lose Teile gibt es nicht. Am Folgefahrrad werden die Flansch- und Klemmbleche 20 zweckmäßig belassen. Denn wird das Kind müde oder die Strecke unwegsam oder verkehrsreich, wird das Gespann mit wenigen, einfachen Handgriffen wiederhergestellt und das Kind auf seinem Fahrrad mit angehobenem Vorderrad abgeschleppt. Bei der Fahrt im Gespann kann das Kind auch unterstützend mittreten und quasi spielerisch und nachahmend und vor allem gefahrlos richtiges Verhalten im Straßenverkehr erlernen.

Durch die Anordnung des Auslegers 1 werden Befestigungs- oder Kuppelpunkt der Anhängerkupplung am Sattelstützrohr 3 und der Drehpunkt am Dreh- und Kippgelenk 17 derart voneinander getrennt, daß sich gegenüber bekannten Vorrichtungen eine deutliche Verkürzung der Rahmenverlängerung bzw. der Verbindungsstange 18 ergibt, wodurch sich bei Kurvenfahrten das Einscheren des Folgefahrrads verringert. Wenn die Anhängerkupplung nicht oder für längere Zeit nicht gebraucht wird, kann sie im Dreh- und Kippgelenk 17 für eine kompakte Lagerung oder Aufbewahrung gefaltet werden.

Die Anhängerkupplung erlaubt auch den Tandemaufbau von zwei gleich großen Fahrrädern.

### Bezugszeichenliste:

- 1: Ausleger
- 2: Klemmverbindung
- 3: Sattelstützrohr
- 4: Prisma
- 4': Prismenklemmflächen
- 4'': keilförmiges Ende
- 5: Gegenriegel
- 6: Spannhebel
- 7,7': Schrauben
- 8: Langloch
- 9: Gabel
- 10: Excenter
- 11: Kurvenfläche
- 12: Stützstangen
- 13: Ausfallenden
- 14: Hinterradgabel
- 15: Schelle
- 16: Lochungen
- 17: Dreh- und Kippgelenk
- 18: Verbindungsstange
- 19: Steuerrohr
- 20: Flansch- und Klemmbleche
- 21, 21': Durchsteckschrauben
- 22: (Feder-) Stecker
- 23: Langloch
- 24: Zapfen (Schraube)
- 25: Halteblech
- 26: Kontermutter
- 27: Sicherungsbügel
- 28: Stellschraube

## Patentansprüche

1. Anhängerkupplung für Fahrräder für das Hintereinanderkuppeln zweier Fahrräder als Zugfahrrad und Folgefahrrad mittels einer Verbindungsstange (18)
dadurch gekennzeichnet,
daß ein Ausleger (1) mit seinem einen Ende durch eine Klemmverbindung (2) vertikal verstellbar mit dem Sattelstützrohr (3) oder der Sattelstütze des Zugfahrrades verbunden ist und an seinem anderen Ende ein Dreh- und Kippgelenk (17) trägt, mit dem das eine Ende der Verbindungsstange (18) verbunden ist und daß das andere Ende der Verbindungstange (18) in eine am Steuerrohr (19) des Folgefahrrads befestigte Halterung (20) kippsicher einsteckbar ist.

2. Anhängerkupplung nach Anspruch 1, dadurch gekennzeichnet, daß die Klemmverbindung (2) aus einen Prisma (4) mit zur Klemmung des Sattelstützrohres (3) an den Prismenklemmflächen (4') parallel zustellbarem Gegenriegel (5) besteht.

3. Anhängerkupplung nach Anspruch 2, dadurch gekennzeichnet, daß das Prisma (4) und der Gegenriegel (5) beidseitig des Sattelstützrohrs (3) von Schrauben (7, 7') durchdrungen sind und das eine Ende des Gegenriegels (5) ein Langloch (8) aufweist, durch das die eine Schraube (7) stößt, und das andere Ende des Gegenriegels (5) gabelförmig ausgebildet ist und durch im Langloch (8)geführte Verschieben und Drehen des Gegenriegels (5) um die eine Schraube (7) mit der anderen Schraube (7') in Eingriff bringbar ist.

4. Anhängerkupplung nach Anspruch 3, dadurch gekennzeichnet, daß der Gegenriegel (5) durch einen Spannhebel (6) parallel auf das Prisma (4) zustellbar ist.

5. Anhängerkupplung nach Anspruch 1, dadurch gekennzeichnet, daß die Verbindungsstange (18) gebogen ist.

6. Anhängerkupplung nach Anspruch 5, dadurch gekennzeichnet, daß der Radius der Verbindungstange (18) etwa dem des Hinterrades des Zugfahrrads entspricht.

7. Anhängerkupplung nach Anspruch 1, dadurch gekennzeichnet, daß der Ausleger (1) an seinem hinteren Ende oder nahe seinem hinteren Ende beidseitig durch Stützstangen (12) an den Ausfallenden (13) der Hinterradgabeln (14) abgestützt ist.

8. Anhängerkuppkung nach Anspruch 7, dadurch gekennzeichnet, daß die Stützstangen (12) an ihrem einen Ende mittels Schelle (15) verschiebbar am Ausleger (1) befestigt sind und ihre effektive Länge durch Drehen der Schelle (15) um 180° veränderbar ist.

9. Anhängerkupplung nach Anspruch 7 oder 8, dadurch gekennzeichnet, daß die Stützstangen (12) an ihrem an den Hinterradgabeln (14) zu befestigendem Ende jeweils eine Reihe von Lochungen (16) aufweisen, mit denen sie auf jeweils einen von den Ausfallenden (13) der Hinterradgabeln(14) vorstehenden Zapfen (24) aufsteckbar sind.

10. Anhängerkupplung nach Anspruch 9, dadurch gekennzeichnet, daß die auf den Zapfen (24) aufgesteckten Enden der Stützstangen (12) darauf durch ein Halteblech (25) mit Sicherungsbügel (27) gesichert sind.

11. Anhängerkupplung nach einem der Ansprüche 2 bis 4, dadurch gekennzeichnet, daß das Prisma (4) mit einem keilförmig zulaufenden Ende (4'') in den als Vierkantrohr ausgebildeten Ausleger (1) hineinragt und eine Stellschraube (28) durch Bohrungen in der Wand des Auslegers (1) und eine mit diesen fluchtende Gewindebohrung im keilförmigen Ende (4'') des Prismas (4) ragt.

12. Anhängerkupplung nach Anspruch 1, dadurch gekennzeichnet, daß das mit dem Folgefahrrad zu verbindende Ende der Verbindungsstange (18) schnabelförmig ausgebildet ist und mit diesem Schnabel zwischen zwei am Steuerrohr (19) des Folgefahrrads angebrachten Flansch- und Klemmbleche (20) einschiebbar und auf einer die Flansch- und Klemmbleche (20) durchstoßenden Durchsteckschraube (21) aufsetzbar und durch einen die Flansch- und Klemmbleche (20) und das eine Schnabelende mit Spiel durchstoßenden (Feder-)Stecker (22) sicherbar ist.

13. Anhängerkupplung nach Anspruch 12, dadurch gekennzeichnet, daß die Flansch- und Klemmbleche (20) an ihrem von der Verbindungsstelle mit der Verbindungsstange (18) abgewandten Ende zwei gebogene, sich deckende Langlöcher (23) aufweisen, durch die eine Durchsteckschraube (21') ragt, um die die Flansch- und Klemmbleche (20) verschwenkbar sind.

14. Anhängerkupplung nach Anspruch 12, dadurch gekennzeichnet, daß die Verbindungsstange (18) bei abgehängtem Folgefahrrad im Dreh- und Kippgelenk (17) in eine Bereitschaftsstellung nahe am Hinterrad des Zugfahrrads schwenkbar ist und in dieser Stellung am Dreh- und Kippgelenk (17) durch den (Feder-)Stecker (22) gegen Kippen sicherbar ist.
